# EUROPÄISCHE PATENTSCHRIFT

(11) **EP 2 993 369 B1**
(45) Veröffentlichungstag und Bekanntmachung des Hinweises auf die Patenterteilung: **10.01.2018**
(21) Anmeldenummer: 15177602.8
(22) Anmeldetag: 21.07.2015
(51) Int. Cl.: F16D 25/08, F16D 13/58, F16D 25/12

(54) **TRANSPORTSICHERUNG FÜR EIN-/ AUSRÜCKSYSTEME**
TRANSPORT SECURING SYSTEM FOR EXTENSION/RETRACTION SYSTEM
SECURISATION DE TRANSPORT POUR SYSTEME D'EMBRAYAGE/DEBRAYAGE

(30) Priorität: 11.08.2014 DE 102014215895
(43) Veröffentlichungstag der Anmeldung: 09.03.2016
(73) Patentinhaber: Schaeffler Technologies AG & Co. KG, 91074 Herzogenaurach (DE)
(72) Erfinder: Oser, Johannes, 77855 Achern (DE); Noll, Dominik, 77652 Offenburg (DE)

(56) Entgegenhaltungen:
- WO-A1-2008/086763
- DE-A1- 10 021 175
- DE-A1- 19 909 597

## Beschreibung

Die Erfindung betrifft eine Transportsicherung für Ein-/Ausrücksysteme zur Betätigung von Kupplungen, insbesondere von Doppelkupplungen, nach dem Oberbegriff des ersten Anspruchs.

Transportsicherungen werden eingesetzt, um bewegliche Teile der Kupplung oder des Getriebes bei einem Transport zu schützen und ein Verlieren beispielsweise des Kolbens und/oder des Ein-/Ausrücklagers im ausgebauten Zustand zu verhindern. Nach erfolgter Montage am Einbauort werden diese Transportsicherungen wieder entfernt oder verbleiben am Ein-/Ausrücksystem.

Aus dem Stand der Technik sind unterschiedliche Lösungen bekannt, um Ein-/ Ausrücksysteme mit konzentrisch angeordneten, axial beweglichen Bauteilen während des Transports gegen eine ungewollte Demontage abzusichern.

So ist aus der DE 10 2009 035 913 A1 eine Transportsicherung für axial bewegliche, konzentrisch angeordnete, Bauteile einer Kupplung oder eines Getriebes eines Kraftfahrzeuges bekannt, die insbesondere für ein an dem Gehäuse eines konzentrischen Nehmerzylinders angeordnetes Ausrücklager vorgesehen ist. Dabei ist ein als Anschlag für das axial bewegliche Ausrücklager dienendes Sicherungselement in axialer Richtung auf das Gehäuse aufschiebbar und unter Vorspannung in einer Sicherungsposition klemmbar. Das Sicherungselement wird hierbei aus einem kreisförmig ausgebildeten Deckel und annähernd orthogonal zu dem Deckel angeordneten Schenkeln gebildet. Allerdings kann sich dieses kappenartige Sicherungselement durch Erschütterungen auf dem Transportweg vom Gehäuse lösen, wodurch die Gefahr besteht, dass das Ausrücklager vom Gehäuse des Nehmerzylinders rutscht.

Die DE 10 2011 081 381 A1 offenbart eine Transportsicherung, vorzugsweise für hydraulische Kupplungsnehmerzylinder, welche als eine Scheibe mit einer zentralen Bohrung und einem nach außen offenen Schlitz ausgebildet ist. Bei der Montage wird die Transportsicherung über einen Arretierungsabsatz an dem Nehmerzylinder eingehängt, wodurch das Ausrücklager während des Transports und anschließender Montage des Nehmerzylinders in seiner Einbaulage gehalten wird. Um den Nehmerzylinder in seinen arbeitsfähigen Zustand zu bringen, wird die Transportsicherung wieder entfernt, indem das Ausrücklager nach unten gedrückt und die Transportsicherung aufgeweitet wird, so dass sie aus dem Nehmerzylinder herausgezogen werden kann. Neben einem relativ großen Bauraum in radialer Richtung beansprucht diese Lösung insbesondere auch eine aufwendige Demontage.

Aus der DE 10 2013 215 740 A1 ist eine Transportsicherung bekannt, welche für ein Ausrücksystem, insbesondere einen Nehmerzylinder mit einem auf einem Gehäuse konzentrisch angeordneten, axial beweglichen Kolben und einem mit dem Kolben verbundenen Ausrücklager vorgesehen ist, bei welcher ein Haltering auf dem Gehäuse in einem inneren Hohlraum des Ausrücklagers befestigt ist. Der Kolben liegt hierbei an einem sich radial nach außen erstreckenden Bund des Halterings an, wodurch eine Begrenzung der axialen Bewegung des Kolbens erfolgt. Die Montage des Halterings erfolgt durch einen Zwischenraum zwischen dem Innendurchmesser des Außenrings des Ausrücklagers und dem Außendurchmesser des Gehäuses. Auch hier ist eine relativ aufwendige Montage/Demontage notwendig, um die Transportsicherung an den Nehmerzylinder anzubringen bzw. diese wieder zu entfernen.

In der WO 2008/086763 wird ein konzentrisch um eine Getriebeeingangswelle angeordneter Nehmerzylinder in einer hydraulischen Strecke zur Kupplungsbetätigung beschrieben, wobei der Axialweg eines auf einer Führungshülse geführten Kolbens durch einen Anschlag begrenzt wird, der gleichzeitig auch als Verliersicherung beim Transport des Nehmerzylinders fungiert. Der Anschlag ist als eine in die Führungshülse einsteckbare Hülse mit einem Bund ausgeführt, wobei der Bund an der kupplungsseitigen Stirnfläche der Führungshülse anliegt und gleichzeitig radial außen als Anlage für den Kolben dient. An ihrem gegenüberliegenden Ende weist die Hülse einen mit einem Hinterschnitt versehenen Bund auf, der mit dem Inneren der Führungshülse korrespondiert. Die primär der Ausbildung eines axialen Anschlags für den Kolben während dessen Betriebes dienende Hülse verhindert zwar auch ein Verlieren des Kolbens auf dem Transportweg, kann aber dabei nicht unbedingt das Ein-/Ausrücklager mit absichern.

Die bekannten Transportsicherungen sind insbesondere zum Einsatz in Ein-/ Ausrücksystemen für einfache Kupplungen vorgesehen. Sie dienen der Absicherung eines einzigen Ein- bzw. Ausrücksystems, speziell des Kolbens und/oder des Ein-/ Ausrücklagers. Um beispielsweise Ein-/Ausrücksysteme von Doppelkupplungen während des Transports vor Verlieren zu schützen, müssten zwei derartige Transportsicherungen eingesetzt werden. Eine derartige Anordnung ist z.B. aus DE 100 21 175 A1 bekannt. Eine Doppelkupplung umfasst im Wesentlichen zwei separate Kupplungseinheiten, die unabhängig voneinander über jeweils ein zugeordnetes Ein-/Ausrücksystem eine Verbindung zu einer Getriebeeingangswelle unterbrechen und herstellen können. Jedes Ein-/Ausrücksystem umfasst jeweils einen Nehmerzylinderkolben, wobei die beiden Kolben meist in einem gemeinsamen ringzylindrischen Gehäuse geführt werden. Ein Kolben ist dabei radial außen und der andere Kolben radial innen um die Getriebeeingangswelle angeordnet. Jeder Kolben steht jeweils mit einem Ein-/Ausrücklager in Wirkverbindung, wobei in Abhängigkeit davon, ob es sich um eine zugedrückte oder eine aufgedrückte Kupplung handelt, das Lager bei Betätigung durch den zugeordneten Kolben dabei als Einrücklager oder als Ausrücklager fungiert.

Um die axial beweglichen Teile, wie Kolben und Ein-/Ausrücklager vor einem Verlieren während des Transports zu sichern, kommt üblicherweise für jedes Ein-/ Ausrücksystem der Doppelkupplung eine gesonderte Transportsicherung zum Einsatz. Das bedeutet neben dem Einsatz zusätzlicher Bauteile einen erhöhten Aufwand bei der Herstellung und Montage und ist verbunden mit zusätzlichen Kosten. Auch wird mehr Bauraum benötigt, der gerade bei Ein-/Ausrücksystemen für Doppelkupplungen häufig nicht vorhanden ist. Insbesondere für das radial außen liegende Ein-/Ausrücklager ist das Anbringen einer Transportsicherung aus Platzgründen schwer realisierbar.

Die Aufgabe der Erfindung besteht deshalb darin, eine Transportsicherung für Ein-/ Ausrücksysteme zur Betätigung von Kupplungen, insbesondere von Doppelkupplungen, vorzuschlagen, welche es ermöglicht, bei einfacher Herstellung und leicht durchzuführender Montage/Demontage eine kostengünstige Absicherung von zumindest zwei Ein-/Ausrücksystemen während des Transports zu realisieren.

Bei einer Transportsicherung für Ein-/Ausrücksysteme zur Betätigung von Kupplungen, insbesondere von Doppelkupplungen, wobei in einem Gehäuse mit einer Längsbohrung zur Aufnahme einer Getriebeeingangswelle ein erstes Ein-/Ausrücksystem einen ersten konzentrisch angeordneten, ringförmigen Kolben und ein zweites Ein-/Ausrücksystem einen zweiten konzentrisch angeordneten, ringförmigen Kolben aufweist, wobei der axial verschiebbare erste Kolben mit einem radial außen liegenden Ein-/Ausrücklager und der axial verschiebbare zweite Kolben mit einem radial innen liegenden Ein-/Ausrücklager wirkverbunden ist, und wobei am/im kupplungsseitigen Endbereich des Gehäuses ein Sicherungselement vorgesehen ist, das im Wesentlichen aus einem in die Längsbohrung des Gehäuses einsteckbaren Hülsenteil und einem sich außerhalb der Längsbohrung erstreckenden radialen Flansch besteht, bildet erfindungsgemäß der Flansch für beide Ein-/Ausrücksysteme einen axialen Anschlag.

In vorteilhafter Weise befindet sich von der Kupplungsseite gesehen der Flansch vor den Ein-/Ausrücklagern und verhindert eine von dem Gehäuse weg gerichtete axiale Bewegung sowohl des radial innen liegenden Ein-/Ausrücklagers als auch des radial außen liegenden Ein-/Ausrücklagers. Zur Festlegung einer vordefinierten axialen Position überragt der sich radial erstreckende Flansch das außen liegende Ein- / Ausrücklager oder überdeckt es zumindest teilweise.

In einer vorteilhaften Ausführung ist das in die Längsbohrung des Gehäuses ragende Hülsenteil mittels Formschluss mit dem Gehäuse verbunden. Vorzugsweise ist an dem Hülsenteil eine durch zumindest einen Schnapphaken verwirklichte Schnappgeometrie vorgesehen, die mit einer komplementär ausgebildeten Ausnehmung des Gehäuses in und außer Eingriff bringbar ist.

Eine weitere vorteilhafte Ausgestaltung sieht vor, dass an dem Sicherungselement ein Angriffspunkt für ein Demontagewerkzeug vorgesehen ist. Vorzugsweise ist der Angriffspunkt durch eine Öffnung gebildet, in die das komplementär ausgebildete Demontagewerkzeug eingreift. Dabei ist der axial gerichtete Angriffspunkt/die Öffnung in dem radialen Flansch vorgesehen und befindet sich annähernd in einem gleichen radialen Abstand zu der Längsachse wie die Schnappgeometrie.

Eine weitere vorteilhafte Ausgestaltung sieht vor, in dem Hülsenteil zumindest einen das Verbinden/Lösen von Schnappgeometrie und Ausnehmung unterstützenden axialen Schlitz anzuordnen.

In einer vorteilhaften Ausführung ist die Ausnehmung als radial umlaufende Nut in der Längsbohrung des Gehäuses ausgebildet.

Die Erfindung wird nachfolgend anhand eines Ausführungsbeispiels und zugehöriger Zeichnung näher erläutert. Es zeigen:

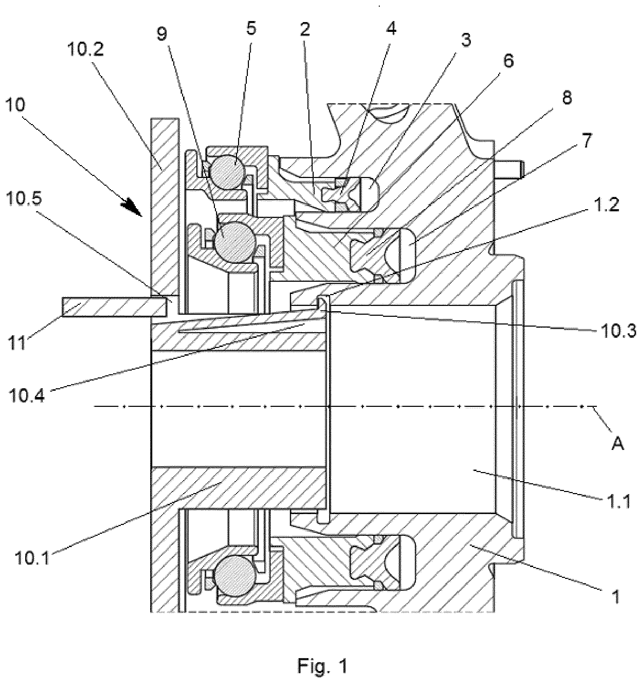

- Fig. 1: eine schematische Darstellung eines Teilschnitts zweier zur Betätigung einer Doppelkupplung dienender Einrücksysteme mit einer erfindungsgemäßen Transportsicherung.

In der einzigen Fig. 1 ist in schematischer Darstellung der kupplungsseitige Endbereich eines ringzylindrisch ausgebildeten Gehäuses 1 gezeigt, das konzentrisch um eine hier durch eine Längsachse A angedeutete Getriebeeingangswelle angeordnet ist und der Aufnahme zweier in der Art eines CSC (Concentric Slave Cylinder) ausgebildeter Einrücksysteme zur Betätigung von zwei - hier nicht gezeigten - Teilkupplungen einer Doppelkupplung dient. Dabei ist in dem Gehäuse 1 ein erster, ringförmig ausgebildeter und konzentrisch um die Längsachse A angeordneter, Kolben 2 zur Ausbildung eines Druckraums 3 axial verschiebbar geführt. Der radial außen in dem Gehäuse 1 befindliche Kolben 2 weist druckraumseitig eine Dichtung 4 auf und ist kupplungsseitig mit einem Einrücklager 5 zur Betätigung der ersten Teilkupplung wirkverbunden. Ein zweiter, ringförmig ausgebildeter und konzentrisch um die Längsachse A angeordneter Kolben 6 ist radial innen in dem ringzylindrischen Gehäuse 1 zur Ausbildung eines Druckraums 7 axial beweglich gelagert und weist druckraumseitig eine Dichtung 8 auf und ist kupplungsseitig mit einem der Betätigung der zweiten Teilkupplung dienenden Einrücklager 9 wirkverbunden.

Auf den weiteren Aufbau und die Wirkungsweise der Einrücksysteme soll hier nicht näher eingegangen werden, da es an sich bekannt und nicht erfindungswesentlich ist. Deshalb ist in der Fig.1 auch nur der oberhalb der Längsachse A befindliche Teil der beiden konzentrisch zur Längsachse A angeordneten Einrücksysteme vollständig dargestellt.

An dem kupplungsseitigen Endbereich des Gehäuses 1 ist ein als Transportsicherung dienendes hülsenartiges Sicherungselement 10 angeordnet, das in eine die Getriebeeingangswelle aufnehmende Längsbohrung 1.1 des Gehäuses 1 eingesteckt ist. Das Sicherungselement 10 besteht im Wesentlichen aus einem sich innerhalb der Längsbohrung 1.1 befindenden Hülsenteil 10.1 und einem sich außerhalb des Gehäuses 1 befindenden, radial auskragenden Flansch 10.2. Dabei ist der radial umlaufende Flansch 10.2 so bemessen, dass er sowohl das innen befindliche Einrücklager 9 als auch das außen angeordnete Einrücklager 6 überdeckt. Die Befestigung des Sicherungselementes 10 erfolgt über das Hülsenteil 10.1 innerhalb der Längsbohrung 1.1 an einer Innenwand des Gehäuses 1 vorzugsweise über eine Schnappverbindung. Dabei ist an dem dem Flansch 10.2 gegenüberliegenden Ende des Hülsenteils 10.1 eine mit der Innenwand des Gehäuses 2 korrespondierende Schnappgeometrie in Form wenigstens eines Schnapphakens 10.3 vorgesehen, welcher mit einer komplementär ausgebildeten Ausnehmung 1.2 des Gehäuses 1 in und außer Eingriff bringbar ist. Beispielsweise kann die Ausnehmung 1.2 als eine in der Innenwand des Gehäuses 1 radial umlaufend angeordnete Nut ausgebildet sein. Ein in axialer Richtung in dem Hülsenteil 10.1 vorgesehener, dem Schnapphaken 10.3 zugeordneter, Schlitz 10.4 macht insbesondere diesen Endbereich elastischer und erleichtert somit die Montage und die Demontage des Sicherungselementes 10. Es können dabei auch mehrere Schnapphaken 10.3 und/oder mehrere Schlitze 10.4 über den Umfang des Hülsenteils 10.1 verteilt vorgesehen sein.

Bei der Montage der Transportsicherung/des Sicherungselementes 10 wird das Hülsenteil 10.1 in die Längsbohrung 1.1 eingesteckt, bis der radial nach außen weisende Schnapphaken 10.3 zum Eingriff in die Ausnehmung 1.2 des Gehäuses 1 gelangt. Bei in die Ausnehmung 1.2 eingerasteter Schnappgeometrie befindet sich der radiale Flansch 10.2 des Sicherungselementes 10 zur Anlage an den Einrücklagern 6, 9 bzw. in einem minimalen Abstand zu diesen - gerade soweit, dass keine Beschädigung des Einrücksystems erfolgt, aber eine zuverlässige Absicherung während des Transportes erzielt wird.

Um bei der Demontage des Sicherungselementes 10 die Schnappverbindung zu lösen und somit die Transportsicherung nach erfolgtem Transport und anschließender Montage der Kupplung wieder zu entfernen, wird ein in Fig. 1 nur angedeutetes Demontagewerkzeug 11 eingesetzt, das stirnseitig an dem Flansch 10.2 in einem Angriffspunkt 10.5 angreift und ein Lösen des Sicherungselementes 10 von dem Gehäuse 1 bewirkt. Dabei befindet sich der Angriffspunkt 10.5 vorzugsweise in einem annähernd gleichen radialen Abstand zur Längsachse A wie der in die Ausnehmung 1.2 eingreifende Schnapphaken 10.3. Vorzugsweise ist der Angriffspunkt 10.5 als eine koaxial zur Längsachse A angeordnete Öffnung ausgebildet, in die das komplementär ausgebildete Demontagewerkzeug 11 eingreift und - nach dem Schlüssel-Schloss-Prinzip wirkend - mittels einer entsprechenden Bewegung den Schnapphaken 10.3 aus der Ausnehmung 1.2 des Gehäuses 1 entfernt. Dazu wird kaum zusätzlicher Bauraum beansprucht.

Die durch das Sicherungselement 10 gebildete erfindungsgemäße Transportsicherung benötigt somit nur ein einziges zusätzliches Bauteil, um einen axialen Anschlag für beide Ein-/Ausrücksysteme zu verwirklichen. Dieser Anschlag wird durch den sich radial erstreckenden Flansch 10.2 des Sicherungselementes 10 gebildet, der sowohl das innere als auch das äußere Ein-/Ausrücklager 5, 9 überdeckt. So wird ein Verlieren der Ein-/Ausrücklager 5, 9 sowie der mit diesen verbundenen Kolben 2, 6 und den zugehörigen Dichtungen 4, 8 während des Transportes und anschließender Montage der Kupplung verhindert. Die erfindungsgemäße Transportsicherung zeichnet sich des Weiteren durch eine einfache Montage über die Schnappgeometrie 10.3 und durch eine leicht zu realisierende Demontage mittels des Demontagewerkzeuges 11 aus. Nach der Demontage der Transportsicherung stehen alle Funktionen der Ein-/Ausrücksysteme vollständig zur Verfügung.

### Bezugszeichenliste

- 1: Gehäuse
- 1.1: Längsbohrung
- 1.2: Ausnehmung
- 2: Kolben
- 3: Druckraum
- 4: Dichtung
- 5: Ein-/Ausrücklager
- 6: Kolben
- 7: Druckraum
- 8: Dichtung
- 9: Ein-/Ausrücklager
- 10: Sicherungselement
- 10.1: Hülsenteil
- 10.2: Flansch
- 10.3: Schnappgeometrie/Schnapphaken
- 10.4: Schlitz
- 10.5: Angriffspunkt/Öffnung
- 11: Demontagewerkzeug
- A: Längsachse

## Patentansprüche

1. Transportsicherung für Ein-/Ausrücksysteme zur Betätigung von Kupplungen, insbesondere von Doppelkupplungen, wobei in einem Gehäuse (1) mit einer Längsbohrung (1.1) zur Aufnahme einer Getriebeeingangswelle ein erstes Ein-/ Ausrücksystem einen ersten konzentrisch angeordneten, ringförmigen Kolben (2) und ein zweites Ein-/Ausrücksystem einen zweiten konzentrisch angeordneten, ringförmigen Kolben (6) aufweist, wobei der axial verschiebbare erste Kolben (2) mit einem radial außen liegenden Ein-/Ausrücklager (5) und der axial verschiebbare zweite Kolben (6) mit einem radial innen liegenden Ein-/ Ausrücklager (9) wirkverbunden ist, und wobei am/im kupplungsseitigen Endbereich des Gehäuses (1) ein Sicherungselement (10) vorgesehen ist, das im Wesentlichen aus einem in die Längsbohrung (1.1) des Gehäuses (1) einsteckbaren Hülsenteil (10.1) und einem sich außerhalb der Längsbohrung (1.1) erstreckenden radialen Flansch (10.2) besteht, **dadurch gekennzeichnet, dass** der Flansch (10.2) für beide Ein-/Ausrücksysteme einen axialen Anschlag bildet.

2. Transportsicherung nach Anspruch 1, **dadurch gekennzeichnet, dass** von der Kupplungsseite gesehen der Flansch (10.2) sich vor den Ein-/Ausrücklagern (5, 9) befindet und eine von dem Gehäuse (1) weg gerichtete axiale Bewegung sowohl des radial innen liegenden Ein-/Ausrücklagers (9) als auch des radial außen liegenden Ein-/Ausrücklagers (5) verhindert.

3. Transportsicherung nach Anspruch 1 oder 2, **dadurch gekennzeichnet, dass** zur Festlegung einer vordefinierten axialen Position der sich radial erstreckende Flansch (10.2) das außen liegende Ein-/Ausrücklager (5) überragt oder zumindest teilweise überdeckt.

4. Transportsicherung nach einem der Ansprüche 1 bis 3, **dadurch gekennzeichnet, dass** das in die Längsbohrung (1.1) des Gehäuses (1) ragende Hülsenteil (10.1) mittels Formschluss mit dem Gehäuse (1) verbunden ist.

5. Transportsicherung nach Anspruch 4, **dadurch gekennzeichnet, dass** an dem Hülsenteil (10.1) eine durch zumindest einen Schnapphaken verwirklichte Schnappgeometrie (10.3) vorgesehen ist, die mit einer komplementär ausgebildeten Ausnehmung (1.2) des Gehäuses (1) in und außer Eingriff bringbar ist.

6. Transportsicherung nach einem der Ansprüche 1 bis 5, **dadurch gekennzeichnet, dass** an dem Sicherungselement (10) ein Angriffspunkt (10.5) für ein Demontagewerkzeug (11) vorgesehen ist.

7. Transportsicherung nach Anspruch 6, **dadurch gekennzeichnet, dass** der Angriffspunkt (10.5) durch eine Öffnung gebildet ist, in die das komplementär ausgebildete Demontagewerkzeug (11) eingreift.

8. Transportsicherung nach Anspruch 6 oder 7, **dadurch gekennzeichnet, dass** der axial gerichtete Angriffspunkt/die Öffnung (10.5) in dem radialen Flansch (10.2) vorgesehen ist und sich annähernd in einem gleichen radialen Abstand zu der Längsachse (A) wie die Schnappgeometrie (10.3) befindet.

9. Transportsicherung nach einem der Ansprüche 5 bis 8, **dadurch gekennzeichnet, dass** in dem Hülsenteil (10.1) zumindest ein das Verbinden/Lösen von Schnappgeometrie (10.3) und Ausnehmung (1.2) unterstützender axialer Schlitz (10.4) vorgesehen ist.

10. Transportsicherung nach einem der Ansprüche 5 bis 9, **dadurch gekennzeichnet, dass** die Ausnehmung (1.2) als radial umlaufende Nut in der Längsbohrung (1.1) des Gehäuses (1) ausgebildet ist.

## Claims

1. Transport securing means for engaging/releasing systems of clutches, in particular of double clutches, a first engaging/releasing system having a first concentrically arranged, annular piston (2) and a second engaging/releasing system having a second concentrically arranged, annular piston (6) in a housing (1) with a longitudinal bore (1.1) for receiving a transmission input shaft, the axially displaceable first piston (2) being operatively connected to a radially outer engaging/releasing bearing (5), and the axially displaceable second piston (6) being operatively connected to a radially inner engaging/releasing bearing (9), and a securing element (10) being provided on/in the clutch-side end region of the housing (1), which securing element (10) consists substantially of a sleeve part (10.1) which can be plugged into the longitudinal bore (1.1) of the housing (1) and a radial flange (10.2) which extends outside the longitudinal bore (1.1), **characterized in that** the flange (10.2) forms an axial stop for the two engaging/releasing systems.

2. Transport securing means according to Claim 1, **characterized in that**, as viewed from the clutch side, the flange (10.2) is situated in front of the engaging/releasing bearings (5, 9) and prevents an axial movement which is directed away from the housing (1) both of the radially inner engaging/releasing bearing (9) and of the radially outer engaging/releasing bearing (5).

3. Transport securing means according to Claim 1 or 2, **characterized in that** the radially extending flange (10.2) protrudes beyond or at least partially covers the outer engaging/releasing bearing (5) in order to fix a predefined axial position.

4. Transport securing means according to one of Claims 1 to 3, **characterized in that** the sleeve part (10.1) which protrudes into the longitudinal bore (1.1) of the housing (1) is connected to the housing (1) by means of a positively locking connection.

5. Transport securing means according to Claim 4, **characterized in that** a snap-action geometry (10.3) which is realized by way of at least one snap-in hook is provided on the sleeve part (10.1), which snap-action geometry (10.3) can be brought into and out of engagement with a recess (1.2) of complementary configuration of the housing (1).

6. Transport securing means according to one of Claims 1 to 5, **characterized in that** an action point (10.5) for a dismantling tool (11) is provided on the securing element (10).

7. Transport securing means according to Claim 6, **characterized in that** the action point (10.5) is formed by way of an opening, into which the dismantling tool (11) of complementary configuration engages.

8. Transport securing means according to Claim 6 or 7, **characterized in that** the axially directed action point/the opening (10.5) is provided in the radial flange (10.2) and is situated approximately at an identical radial spacing from the longitudinal axis (A) as the snap-action geometry (10.3).

9. Transport securing means according to one of Claims 5 to 8, **characterized in that** at least one axial slot (10.4) which assists the connection/release of the snap-action geometry (10.3) and the recess (1.2) is provided in the sleeve part (10.1).

10. Transport securing means according to one of Claims 5 to 9, **characterized in that** the recess (1.2) is configured as a radially circumferential groove in the longitudinal bore (1.1) of the housing (1).

## Revendications

1. Sécurisation de transport pour systèmes d'embrayage/débrayage pour l'actionnement d'embrayages, en particulier de doubles embrayages, où, dans un boîtier (1) avec un alésage longitudinal (1.1) pour recevoir un arbre d'entrée de boîte de vitesses, un premier système d'embrayage/débrayage présente un premier piston annulaire disposé concentriquement (2) et un deuxième système d'embrayage/débrayage présente un deuxième piston annulaire disposé concentriquement (6), le premier piston déplaçable axialement (2) étant en liaison fonctionnelle avec un palier d'embrayage/débrayage (5) situé radialement à l'extérieur et le deuxième piston déplaçable axialement (6) étant en liaison fonctionnelle avec un palier d'embrayage/débrayage (9) situé radialement à l'intérieur, et un élément de sécurisation (10) étant prévu sur/dans la région d'extrémité côté embrayage du boîtier (1), lequel se compose essentiellement d'une partie de douille (10.1) pouvant être enfichée dans l'alésage longitudinal (1.1) du boîtier (1) et d'une bride radiale (10.2) s'étendant à l'extérieur de l'alésage longitudinal (1.1), **caractérisée en ce que** la bride (10.2) forme une butée axiale pour les deux systèmes d'embrayage/débrayage.

2. Sécurisation de transport selon la revendication 1, **caractérisée en ce que**, vu depuis le côté d'embrayage, la bride (10.2) se trouve devant les paliers d'embrayage/débrayage (5, 9) et empêche un déplacement axial orienté à l'écart du boîtier (1) à la fois du palier d'embrayage/débrayage (9) situé radialement à l'intérieur et du palier d'embrayage/débrayage (5) situé radialement à l'extérieur.

3. Sécurisation de transport selon la revendication 1 ou 2, **caractérisée en ce que** pour établir une position axiale prédéfinie, la bride s'étendant radialement (10.2) dépasse du palier d'embrayage/débrayage (5) situé à l'extérieur ou le recouvre au moins partiellement.

4. Sécurisation de transport selon l'une quelconque des revendications 1 à 3, **caractérisée en ce que** la partie de douille (10.1) pénétrant dans l'alésage longitudinal (1.1) du boîtier (1) est reliée par engagement par correspondance de formes au boîtier (1).

5. Sécurisation de transport selon la revendication 4, **caractérisée en ce qu'**une géométrie d'encliquetage (10.3) réalisée par au moins un crochet d'encliquetage est prévue au niveau de la partie de douille (10.1), laquelle peut être amenée en prise et hors d'engagement avec un évidement (1.2) du boîtier (1) réalisé de manière complémentaire.

6. Sécurisation de transport selon l'une quelconque des revendications 1 à 5, **caractérisée en ce qu'**un point d'attaque (10.5) pour un outil de démontage (11) est prévu au niveau de l'élément de sécurisation (10).

7. Sécurisation de transport selon la revendication 6, **caractérisée en ce que** le point d'attaque (10.5) est formé par une ouverture dans laquelle s'engage l'outil de démontage (11) réalisé de manière complémentaire.

8. Sécurisation de transport selon la revendication 6 ou 7, **caractérisée en ce que** le point d'attaque orienté axialement/l'ouverture (10.5) est prévu(e) dans la bride radiale (10.2) et se trouve approximativement à une même distance radiale de l'axe longitudinal (A) que la géométrie d'encliquetage (10.3).

9. Sécurisation de transport selon l'une quelconque des revendications 5 à 8, **caractérisée en ce qu'**au moins une fente (10.4) axiale supportant la connexion/déconnexion de la géométrie d'encliquetage (10.3) et de l'évidement (1.2) est prévue dans la partie de douille (10.1).

10. Sécurisation de transport selon l'une quelconque des revendications 5 à 9, **caractérisée en ce que** l'évidement (1.2) est réalisé sous forme de rainure radialement périphérique dans l'alésage longitudinal (1.1) du boîtier (1).
